# EUROPEAN PATENT APPLICATION

(11) **EP 4 450 462 A1**
(43) Date of publication of application: **23.10.2024**
(21) Application number: 24162310.7
(22) Date of filing: 08.03.2024
(51) Int. Cl.: C01G 53/00, H01M 4/505

(54) **METHOD OF PRODUCING POSITIVE ELECTRODE ACTIVE MATERIAL, POSITIVE ELECTRODE ACTIVE MATERIAL, POSITIVE ELECTRODE PLATE, AND NON-AQUEOUS ELECTROLYTE SECONDARY BATTERY**

(30) Priority: 17.04.2023 JP 2023067148
(71) Applicant: Prime Planet Energy & Solutions, Inc., Chuo-ku Tokyo 103-0022 (JP)
(72) Inventor: TAKAHASHI, Keiichi, Tokyo, 103-0022 (JP)
(74) Representative: Kuhnen & Wacker Patent- und Rechtsanwaltsbüro PartG mbB

(57) **Abstract**

The present disclosure relates to a method of producing a positive electrode active material, the method comprising: a preparation step that involves preparing aggregate particles including a nickel-cobalt-manganese-based compound having a ratio of nickel of 75 mol% or more; a first treatment step that involves treating a surface of the aggregate particles with a fluorine-based compound at a temperature of 80°C or more; and a second treatment step that involves treating the surface of the aggregate particles after the first treatment step, with at least one selected from the group consisting of a lithium-containing metal oxide and lithium borate. The present disclosure makes it possible to provide a positive electrode active material capable of reducing degradation of storage properties, a method of producing the same, as well as a positive electrode plate (20) and a non-aqueous electrolyte secondary battery (100) including the same.

## Description

### CROSS REFERENCE TO RELATED APPLICATIONS

This nonprovisional application is based on Japanese Patent Application No. 2023-067148 filed on April 17, 2023, with the Japan Patent Office, the entire contents of which are hereby incorporated by reference.

### BACKGROUND OF THE INVENTION

### Field of the Invention

The present disclosure relates to a method of producing a positive electrode active material, and it also relates to a positive electrode active material, a positive electrode plate, and a non-aqueous electrolyte secondary battery.

### Description of the Background Art

Japanese Patent Laying-Open No. 2020-87879 discloses a lithium-metal composite oxide that is formed of secondary particles each of which is an aggregate of primary particles as well as single particles which are present independently of the secondary particles, and it suggests making the particle size of the single particles relatively small to reduce particle breakage.

### SUMMARY OF THE INVENTION

When single particles are used in a positive electrode plate of a non-aqueous electrolyte secondary battery (hereinafter also called a battery), the amount of gas produced during storage of the battery (hereinafter also called a storage gas amount) tends to increase and the storage properties of the battery tend to be degraded.

An object of the present disclosure is to provide a positive electrode active material capable of reducing degradation of storage properties of the battery, a method of producing the same, as well as a positive electrode plate and a non-aqueous electrolyte secondary battery including the same.

The present disclosure provides a method of producing a positive electrode active material, a positive electrode active material, as well as a positive electrode plate and a non-aqueous electrolyte secondary battery including the same, as described below.
[1] A method of producing a positive electrode active material, the method comprising:
   a preparation step that involves preparing aggregate particles including a nickel-cobalt-manganese-based compound having a ratio of nickel of 75 mol% or more;
   a first treatment step that involves treating a surface of the aggregate particles with a fluorine-based compound at a temperature of 80°C or more; and
   a second treatment step that involves treating the surface of the aggregate particles after the first treatment step, with at least one selected from the group consisting of a lithium-containing metal oxide and lithium borate.
[2] The method of producing a positive electrode active material according to [1], wherein the fluorine-based compound is a compound containing a perfluoroalkyl group.
[3] The method of producing a positive electrode active material according to [1] or [2], wherein the lithium-containing metal oxide is at least one selected from the group consisting of lithium tungstate, lithium zirconate, lithium titanate, and lithium aluminate.
[4] The method of producing a positive electrode active material according to any one of [1] to [3], further comprising a mixing step that involves mixing the aggregate particles after the second treatment step, with single particles including a nickel-cobalt-manganese-based compound having a ratio of nickel of 70 mol% or more.
[5] The method of producing a positive electrode active material according to [4], wherein a mass ratio between the aggregate particles and the single particles is from 20:80 to 50:50.
[6] A positive electrode active material, wherein a gas production amount after storage testing conducted at a temperature of 60°C for 60 days is 6.0 cm³/Ah or less, and aggregate particles containing a nickel-cobalt-manganese-based compound having a ratio of nickel of 75 mol% or more are included.
[7] A positive electrode plate, comprising the positive electrode active material according to [6].
[8] A non-aqueous electrolyte secondary battery, comprising the positive electrode plate according to [7].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic flowchart illustrating a method of producing a positive electrode active material according to the present embodiment.
Fig. 2 is a schematic view illustrating an example of a battery according to the present embodiment.
Fig. 3 is a schematic view illustrating an example of an electrode assembly according to the present embodiment.
Fig. 4 is a conceptual view illustrating a positive electrode plate according to the present embodiment.
Fig. 5 is a schematic flowchart illustrating a method of producing a positive electrode plate according to the present embodiment.

### DESCRIPTION OF THE PREFERRED EMBODIMENTS

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

Herein, a singular form also includes its plural meaning, unless otherwise specified. For example, "a particle" may mean not only "one particle" but also "a group of particles (powder, particles)".

### <Method of Producing Positive Electrode Active Material>

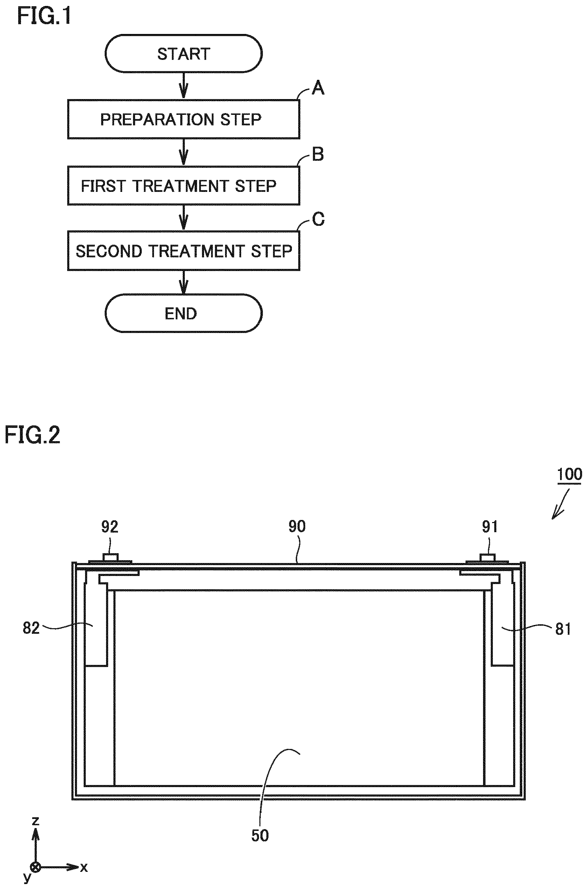

A method of producing a positive electrode active material according to an aspect of the present disclosure comprises, as illustrated in Fig. 1, a preparation step (A) that involves preparing aggregate particles including a nickel-cobalt-manganese-based compound having a ratio of nickel of 75 mol% or more (hereinafter also called a first NCM compound), a first treatment step (B) that involves treating a surface of the aggregate particles with a fluorine-based compound at a temperature of 80°C or more, and a second treatment step (C) that involves treating the surface of the aggregate particles after the first treatment step, with at least one selected from the group consisting of a lithium-containing metal oxide and lithium borate.

Single particles need to be treated at high temperatures during the production, as compared to aggregate particles, so they tend to have a high cation mixing value; for the purpose of inhibiting this phenomenon, Li/Me is often made to be 1 or more. This tends to lead to an increase of alkaline components present on the surface of the single particles, and, then, due to alkaline components remaining on the surface of the single particles, the amount of storage gas (the storage gas amount) tends to increase to cause degradation of storage properties. It is conjectured that this phenomenon is caused by one type of the alkaline components that changes its form from LiOH, via LiHCO₃, to Li₂CO₃ to produce CO₂ gas during high-temperature storage. Not only the degradation of the alkaline components present on the surface of the positive electrode active material, but also degradation of electrolyte solution tends to take place due to the electrolyte solution coming into contact with the positive electrode active material. When the method of producing a positive electrode active material of the present disclosure is employed which involves surface-treatment of the aggregate particles with a fluorine-based compound followed by element coating, a barrier layer is formed between the surface of the aggregate particles and the coating layer that is capable of inhibiting gas production, and thereby the above-mentioned gas production caused by alkaline components tends to be reduced, leading to reduced degradation of storage properties. Herein, the storage properties are evaluated by a method that is described below in the Examples section.

The aggregate particle prepared in the preparation step (A) may be an aggregate of primary particles. The size of the aggregate particles is not particularly limited. For example, the average particle size (D50, D70, D30) of the aggregate particles may be from 1 µm to 40 µm, preferably from 1 µm to 30 µm, more preferably from 1 µm to 20 µm. The average particle sizes D50, D70, and D30 refer to particle sizes in volume-based particle size distribution at which the cumulative particle volume accumulated from the side of small particle sizes reaches 50%, 70%, and 30%, respectively, of the total particle volume. The average particle size may be measured by laser diffraction and scattering.

A primary particle refers to a particle whose grain boundary is not visually identified in an SEM image of the particle, and whose average primary particle size is less than 0.5 µm. The average primary particle size refers to the distance between two points located farthest apart from each other on the outline of the primary particle. The average primary particle size of the primary particles may be from 0.05 µm to 0.2 µm, or from 0.1 µm to 0.2 µm, for example. When each of 10 or more primary particles randomly selected from an SEM image of one aggregated particle has an average primary particle size from 0.05 µm to 0.2 µm, it is regarded that the average primary particle size of all the primary particles included in this aggregated particle is from 0.05 µm to 0.2 µm. The primary particles may have an average primary particle size from 0.1 µm to 0.2 µm, for example.

The first NCM compound has a ratio of nickel of 75 mol% or more, preferably 78 mol% or more, more preferably 81 mol% or more. The ratio of nickel refers to the ratio of nickel to metallic elements except lithium.

Preferably, the first NCM compound includes a nickel-cobalt-manganese composite hydroxide, more preferably a lithium-nickel-cobalt-manganese composite oxide. The nickel-cobalt-manganese composite hydroxide may be obtained by coprecipitation and/or the like, for example. The nickel-cobalt-manganese composite hydroxide may be a compound represented by the general formula NiₓCo_{y}Mn_{z}(OH)₂ (where x+y+z=1), for example. In the lithium-nickel-cobalt-manganese composite oxide, the molar ratio of lithium to nickel, cobalt, and manganese, namely Li:(Ni+Co+Mn), can be (1.0 to 1.2):1.0, for example.

For example, the first NCM compound may include one, two, or more types of a first layered metal oxide represented by the following formula (1):

Li₁₋ₐ₁Niₓ₁Me¹₁₋ₓ₁O₂ (1)

[in the formula (1),
"a1" satisfies the relationship of -0.3≤a1≤0.3,
"x1" satisfies the relationship of 0.75≤x1≤1.0, and
"Me¹" denotes at least one selected from the group consisting of Co, Mn, Al, Zr, Ti, V, Cr, Fe, Cu, Zn, Mo, Sn, Ge, Nb, and W].

For example, the aggregate particles (primary particles) may include at least one selected from the group consisting of LiNi_{0.75}Co_{0.15}Mn_{0.1}O₂, LiNi_{0.75}Co_{0.1}Mn_{0.15}O₂, and LiNi_{0.8}Co_{0.1}Mn_{0.1}O₂. For example, the aggregate particles (primary particles) may consist essentially of at least one selected from the group consisting of LiNi_{0.75}Co_{0.15}Mn_{0.1}O₂, LiNi_{0.75}Co_{0.1}Mn_{0.15}O₂, and LiNi_{0.8}Co_{0.1}Mn_{0.1}O₂.

When the aggregate particles include a lithium-nickel-cobalt-manganese composite oxide, the aggregate particles can be obtained by mixing a lithium source such as, for example, lithium hydroxide with a nickel-cobalt-manganese composite hydroxide and calcining the resultant, followed by wet grinding in a ball mill and/or the like and drying.

The fluorine-based compound used for treating the surface of the aggregate particles in the first treatment step (B) is not particularly limited in terms of the length of the main chain, as long as at least one atom on a side chain is a fluorine atom; for example, it may have a functional group such as an aliphatic hydrocarbon group (such as a methyl group, an ethyl group, and/or the like, for example) and/or an aromatic hydrocarbon group (such as a benzene ring, for example), and at least one of the hydrogen atoms of the functional group may be substituted with fluorine. Examples of the fluorine-containing compound include compounds containing a perfluoroalkyl group, and the like. Specific examples thereof include trimethoxysilane (C₆H₁₆O₃Si), perfluorohexylethyltriethoxysilane (CF₃(CF₂)₅CH₂CH₂Si(OEt)₃), perfluorohexylethyltrimethoxysilane (CF₃(CF₂)₅CH₂CH₂Si(OMe)₃), perfluorohexylethyltrichlorosilane (CF₃(CF₂)₅CH₂CH₂SiCl₃), CF₃(CF₂)₉CH₂CH₂Si(OCH₃)₃, CF₃(CF₂)₃(C₆H₄)CH(OH)CH₃, and the like. As the fluorine-based compound, a fluorine-containing surfactant and/or the like can also be used, for example.

The temperature for treating the surface of the aggregate particles with the fluorine-based compound is 80°C or more, and from the viewpoint of storage properties, it is preferably from 80°C to 160°C. The method for treating the surface of the aggregate particles with the fluorine-based compound is not particularly limited as long as it is capable of causing the fluorine-based compound to be present on a part of the surface of the aggregate particles, and examples of such a method include covering treatment such as mechanochemical treatment. The mechanochemical treatment can be a treatment that involves subjecting, in a dry mode for example, a base (the aggregate particles) and the covering substance particles (the fluorine-based compound) to high-speed rotation together with a medium (such as zirconia beads, for example) inside a vessel, to crush and bond the covering substance particles to the surface of the base to achieve covering.

The lithium-containing metal oxide used in the second treatment step (C) can include at least one selected from the group consisting of lithium tungstate (Li₂WO₄), lithium zirconate (Li₂ZrO₃), lithium titanate (Li₂TiO₃), and lithium aluminate (LiAlO₂), for example. From the viewpoint of storage properties, it is preferable to use lithium borate.

The method for treating, in the second treatment step (C), the surface of the aggregate particles after the first treatment step with at least one selected from the group consisting of a lithium-containing metal oxide and lithium borate can be, for example, a method that involves performing heat treatment of the aggregate particles with the use of at least one selected from the group consisting of a metal oxide and boric acid as well as a lithium salt. For example, it may be a method that involves mixing the aggregate particles after the first treatment step with at least one selected from the group consisting of a metal oxide and boric acid as well as a lithium salt and heating the resultant at a temperature from 200°C to 400°C for one hour. Examples of the lithium salt include lithium carbonate and the like. Examples of the metal oxide include tungstic acid (H₃BO₃), zirconic acid (H₄O₄Zr), titanic acid (H₄TiO₄), aluminic acid (HAlO₂), and the like. The heat treatment time is preferably from 10 minutes to 60 minutes, from the viewpoint of storage properties.

The method of producing a positive electrode active material can further include a mixing step that involves mixing the aggregate particles after the second treatment step with single particles including an NCM compound having a ratio of nickel of 70 mol% or more (hereinafter also called a second NCM compound). The size of the single particles is not particularly limited. For example, the average particle size of the single particles, D50, may be from 1 µm to 20 µm, preferably from 1 µm to 10 µm, more preferably from 1 µm to 5 µm.

The ratio of nickel in the second NCM compound is 70 mol% or more, preferably 73 mol% or more, more preferably 76 mol% or more.

Preferably, the second NCM compound includes a nickel-cobalt-manganese composite hydroxide, more preferably a lithium-nickel-cobalt-manganese composite oxide. The nickel-cobalt-manganese composite hydroxide may be obtained by coprecipitation and/or the like, for example. The nickel-cobalt-manganese composite hydroxide may be a compound represented by the general formula NiₓCo_{y}Mn_{z}(OH)₂ (where x+y+z=1), for example. In the lithium-nickel-cobalt-manganese composite oxide, the molar ratio of lithium to nickel, cobalt, and manganese, namely Li:(Ni+Co+Mn), can be (1.0 to 1.2): 1.0, for example.

For example, the single particles may include one, two, or more types of a second layered metal oxide represented by the following formula (2):

Li₁₋ₐ₂Niₓ₂Me²₁₋ₓ₂O₂ (2)

[in the formula (2),
"a2" satisfies the relationship of -0.3≤a2≤0.3,
"x2" satisfies the relationship of 0.7≤x2<1.0, and
"Me²" denotes at least one selected from the group consisting of Co, Mn, Al, Zr, Ti, V, Cr, Fe, Cu, Zn, Mo, Sn, Ge, Nb, and W].

For example, the single particles may include at least one selected from the group consisting of LiNi_{0.7}Co_{0.2}Mn_{0.1}O₂, LiNi_{0.7}Co_{0.1}Mn_{0.2}O₂, and LiNi_{0.8}Co_{0.1}Mn_{0.1}O₂. For example, the single particles may consist essentially of at least one selected from the group consisting of LiNi_{0.7}Co_{0.2}Mn_{0.1}O₂, LiNi_{0.7}Co_{0.1}Mn_{0.2}O₂, and LiNi_{0.8}Co_{0.1}Mn_{0.1}O₂.

When the single particles include a lithium-nickel-cobalt-manganese composite oxide, the single particles can be obtained by mixing a lithium source such as, for example, lithium hydroxide with a nickel-cobalt-manganese composite hydroxide and calcining the resultant, followed by wet grinding in a ball mill and/or the like and drying. The single particles may have been surface-treated.

In the mixing step, the single particles can be mixed so as to achieve a mass ratio between the aggregate particles and the single particles from 20:80 to 50:50, for example, and preferably from 30:70 to 50:50. With the positive electrode active material including the single particles and the aggregate particles in a mass ratio within the above-described range, particle breakage tends to be reduced. In a positive electrode active material layer that is formed of the positive electrode active material including the single particles and the aggregate particles in a mass ratio within the above-described range, particle breakage tends to be reduced even when the density is 3.7 g/cm³ or more.

### <Positive Electrode Active Material>

A positive electrode active material according to another aspect of the present disclosure has a gas production amount after storage testing conducted at a temperature of 60°C for 60 days of 6.0 cm³/Ah or less, and includes aggregate particles containing an NCM compound having a ratio of nickel of 75 mol% or more. In the positive electrode active material according to the present disclosure, because it includes the aggregate particles, storage gas production tends to be reduced and degradation of storage properties tends to be reduced. The aggregate particles can be aggregate particles obtainable by the above-described method of producing a positive electrode active material. To the aggregate particles and to the NCM compound having a ratio of nickel of 75 mol% or more, the above description about the aggregate particles and the first NCM compound in the method of producing a positive electrode active material are applied, respectively. The gas production amount after storage testing conducted at a temperature of 60°C for 60 days is measured by a method that is described below in the Examples section.

The positive electrode active material can further include single particles including an NCM compound having a ratio of nickel of 70 mol% or more. To the single particles and to the NCM compound having a ratio of nickel of 70 mol% or more (hereinafter also called a second NCM compound), the above description about the single particles and the second NCM compound in the method of producing a positive electrode active material are applied, respectively. The mass ratio between the aggregate particles and the single particles in the positive electrode active material may be, for example, from 20:80 to 50:50, preferably from 30:70 to 50:50. With the mass ratio between the single particles and the aggregate particles in the positive electrode active material being within the above-mentioned range, particle breakage tends to be reduced.

### <Non-Aqueous Electrolyte Secondary Battery>

Fig. 2 is a schematic view illustrating an example of a non-aqueous electrolyte secondary battery according to the present embodiment. A battery 100 illustrated in Fig. 2 may be, for example, a lithium-ion battery as a main electric power supply or a motive force assisting electric power supply of an electric vehicle.

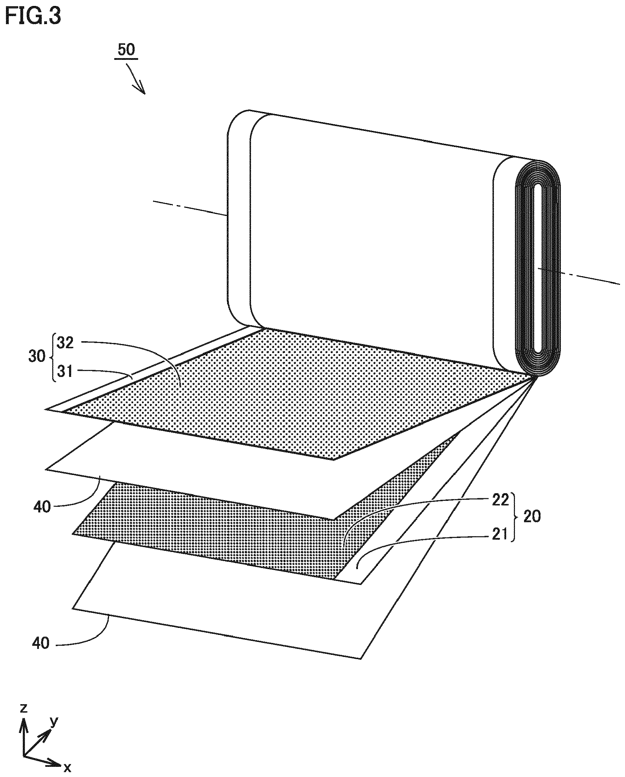

Battery 100 includes an exterior package 90. Exterior package 90 accommodates an electrode assembly 50 and an electrolyte (not illustrated). Electrode assembly 50 is connected to a positive electrode terminal 91 via a positive electrode current-collecting member 81. Electrode assembly 50 is connected to a negative electrode terminal 92 via a negative electrode current-collecting member 82. Fig. 3 is a schematic view illustrating an example of an electrode assembly according to the present embodiment. Electrode assembly 50 is a wound-type one. Electrode assembly 50 includes a positive electrode plate 20, a separator 40, and a negative electrode plate 30. That is, battery 100 includes positive electrode plate 20. Positive electrode plate 20 includes a positive electrode active material layer 22 and a positive electrode base material 21. Negative electrode plate 30 includes a negative electrode active material layer 32 and a negative electrode base material 31.

### <Positive Electrode Plate>

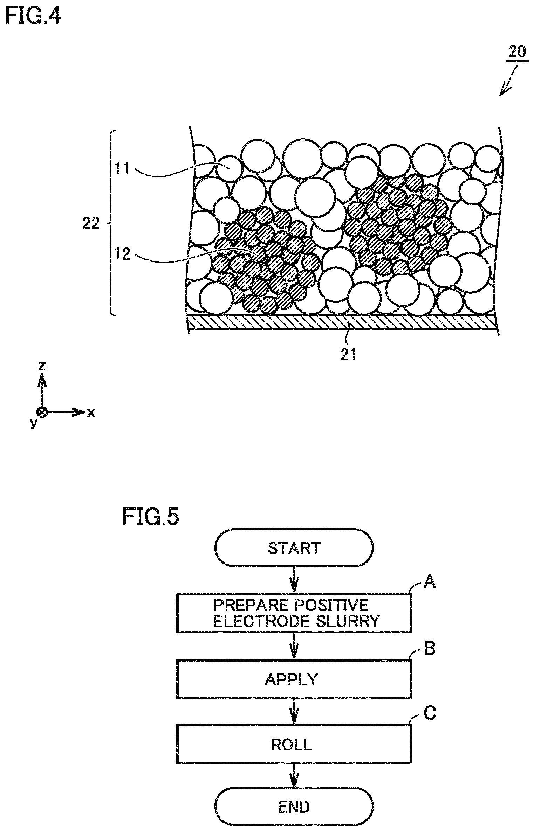

As illustrated in Fig. 4, in positive electrode plate 20, positive electrode active material layer 22 may be formed directly or indirectly on one side or both sides of positive electrode base material 21. Positive electrode base material 21 may be a conductive sheet made of Al alloy foil, pure Al foil, and/or the like, for example. The positive electrode active material of positive electrode active material layer 22 includes aggregate particles 12. As illustrated in Fig. 4, the positive electrode active material can include single particles 11. The positive electrode active material can be produced by the above-described method of producing a positive electrode active material. Positive electrode active material layer 22 may further include a conductive material, a binder, and the like.

Positive electrode active material layer 22 may have a thickness from 10 µm to 200 µm, for example. Positive electrode active material layer 22 may have a high density. The density of positive electrode active material layer 22 may be 3.65 g/cm³ or more, or 3.7 g/cm³ or more, or 3.8 g/cm³ or more, for example. The density of positive electrode active material layer 22 may be 4.0 g/cm³ or less, for example.

### <Method of Producing Positive Electrode Plate>

As illustrated in Fig. 5, the method of producing positive electrode plate 20 according to the present embodiment includes preparation of a positive electrode slurry (A), application (B), and rolling (C). In the preparation of a positive electrode slurry (A), a positive electrode slurry including the positive electrode active material produced by the above-described method of producing a positive electrode active material is prepared. The positive electrode slurry is prepared by dispersing the positive electrode active material in a dispersion medium. The dispersion medium may be an organic solvent, and the examples thereof include N-methyl-2-pyrrolidone (NMP), tetrahydrofuran (THF), dimethylformamide (DMF), methyl ethyl ketone (MEK), dimethyl sulfoxide (DMSO), and the like. The positive electrode slurry can include a conductive material and a binder. Examples of the conductive material include carbon nanotubes, carbon black such as acetylene black (AB), other carbon materials (such as graphite, for example), and the like. Examples of the binder include polyvinylidene difluoride (PVdF), polytetrafluoroethylene (PTFE), polyimide (PI), polyamide (PA), polyamide-imide (PAI), butadiene rubber (BR), styrenebutadiene rubber (SBR), nitrile-butadiene rubber (NBR), styrene-ethylene-butylene-styrene block copolymer (SEBS), carboxymethyl cellulose (CMC), a combination of these, and the like. The slurry may have a solid concentration from 40% to 80%, for example. For the mixing, any stirring apparatus, any mixing apparatus, and/or any dispersing apparatus may be used.

In the application (B), the positive electrode slurry is applied to the surface of positive electrode base material 21 to form positive electrode active material layer 22. In the rolling (C), positive electrode active material layer 22 and positive electrode base material 21 are rolled together to produce positive electrode plate 20. As a result of the rolling, a raw sheet of positive electrode plate 20 is produced. The raw sheet may be cut into a certain planar size, depending on the specifications of battery 100.

### [Examples]

In the following, the present invention will be described in further detail by way of Examples. "%" and "part(s)" in Examples refer to mass% and part(s) by mass, respectively, unless otherwise specified.

### <Example 1>

### [Production of Aggregate Particles]

A nickel-cobalt-manganese composite hydroxide obtained by coprecipitation having a composition of Ni_{0.83}Co_{0.05}Mn_{0.12}(OH)₂ was calcined together with lithium hydroxide at a temperature of 800°C for 10 hours in an oxygen atmosphere, followed by disintegration, and thereby aggregate particles of lithium composite oxide were obtained (a preparation step). To the resulting aggregate particles, a trimethoxysilane solvent having a perfluoroalkyl group containing fluorine (hereinafter also called a trimethoxysilane solvent) was added in an amount of 0.05 wt%, and the resultant was subjected to mixing treatment together with ϕ-2mm zirconia balls in a P5 planetary mill manufactured by FRITSCH. After 30 minutes of the mixing treatment, the temperature was 80°C (a first treatment step). Subsequently, to the resulting aggregate particles of lithium composite oxide in a dispersed state, 0.6 wt% boric acid as well as the same molar amount of lithium carbonate were added, and heat treatment was carried out at a temperature of 300°C to obtain an active material having an aggregated structure and covered with lithium borate (a first composite oxide) (a second treatment step). As for the particle size distribution of the first composite oxide, D50 was 12 µm, D70 was 14 µm, and D30 was 10 µm. As a result of SEM examination of a cross section of the first composite oxide after CP treatment, the average primary particle size of the first composite oxide was 0.13 µm.

### <Example 2 and Comparative Example 2>

Aggregate particles of Example 2 and Comparative Example 2 were produced in the same manner as in Example 1 except that the treatment temperature in the first treatment step of Example 1 was changed to the treatment temperature specified in Table 1.

### <Example 3>

Aggregate particles of Example 3 were produced in the same manner as in Example 1 except that the fluorine-based compound used in Example 1 was replaced by the fluorine-based compound specified in Table 1 and the treatment temperature in the first treatment step in Example 1 was changed to the treatment temperature specified in Table 1.

### <Examples 4 to 6>

Aggregate particles of Examples 4 to 6 were produced in the same manner as in Example 1 except that the fluorine-based compound used in Example 1 was replaced by the fluorine-based compound specified in Table 1, the treatment temperature in the first treatment step in Example 1 was changed to the treatment temperature specified in Table 1, and boric acid in Example 1 was replaced by tungstic acid, titanic acid, or zirconic acid in Examples 4 to 6, respectively, in the same molar amount as in Example 1.

### <Comparative Example 1>

Aggregate particles were produced in the same manner as in Example 1 except that after the preparation step of Example 1, the first treatment step was not performed but the second treatment step was performed.

### [Production of Single Particles]

A nickel-cobalt-manganese composite hydroxide obtained by coprecipitation having a composition of Ni_{0.78}Co_{0.11}Mn_{0.11}(OH)₂ was calcined at 500°C to obtain a nickel-cobalt-manganese composite oxide (Z1). Then, lithium hydroxide and the nickel-cobalt-manganese composite oxide (Z1) were mixed together so as to achieve a molar ratio of Li to the total amount of Ni, Co, and Mn of 1.05: 1, and the resulting mixture was calcined in an oxygen atmosphere at 900°C for 72 hours and then wet ground in a ball mill and dried to form a single particle structure, followed by another heat treatment in an oxygen atmosphere at 750°C for 10 hours to obtain a lithium composite oxide having a single particle structure (a second composite oxide). Measurement of particle size distribution of the second composite oxide revealed that the value of particle size (D50) was 3.6 µm, and SEM structure examination revealed that the second composite oxide was particles having substantially a single particle structure and having a particle size from 2.5 to 3.8 µm.

### [Production of Positive Electrode Plate]

A 1:1 mixture of the aggregate particles obtained in Examples and Comparative Examples and the above-produced single particles, as well as acetylene black and polyvinylidene difluoride (PVdF) were further mixed in a solid mass ratio of 96.3:2.5:1.2, and a proper amount of N-methyl-2-pyrrolidone (NMP) was added, followed by mixing and kneading to prepare a positive electrode composite material slurry. The resulting positive electrode composite material slurry was applied to both sides of an aluminum foil core No. 1N30 having a thickness of 13 µm, and the resulting coating film was dried, followed by compression with a rolling mill to achieve a density of the composite material in the coating film of 3.7 g/cm³, and then cutting into a certain electrode size to obtain a positive electrode plate having a positive electrode composite material layer formed on both sides of the positive electrode core.

### [Production and Evaluation of Small Lithium-Ion Battery]

The positive electrode plate and a carbon negative electrode were combined with a separator interposed therebetween, and the resultant was placed inside a laminated exterior pouch, to which an electrolyte solution was added, and then the resultant was sealed to produce a small laminate-type battery. As for the size of the battery, eight electrode assembly layers were stacked so as to achieve a charged capacity of 600 mAh.

### [Evaluation of Storage Properties]

The battery thus produced was charged, and then stored in a thermostatic chamber at a temperature of 60°C for 60 days, followed by measurement of the gas production amount. Results are shown in Table 1.

**[Table 1]**

| | First treatment step | | Second treatment step | Gas production amount (cm³/Ah) |
|---|---|---|---|---|
| | Fluorine-based compound | Treatment temperature (°C) | Lithium-containing metal oxide | Stored at temperature of 60°C for 60 days |
| Comp. Ex. 1 | None | - | Lithium borate | 14.63 |
| Comp. Ex. 2 | Trimethoxysilane solvent | 30 | Lithium borate | 6.23 |
| Ex. 1 | Trimethoxysilane solvent | 80 | Lithium borate | 3.65 |
| Ex. 2 | Trimethoxysilane solvent | 100 | Lithium borate | 3.82 |
| Ex. 3 | Perfluorohexylethyltriethoxysilane | 120 | Lithium borate | 3.42 |
| Ex. 4 | Perfluorohexylethyltriethoxysilane | 120 | Lithium tungstate | 3.98 |
| Ex. 5 | Perfluorohexylethyltriethoxysilane | 120 | Lithium titanate | 4.11 |
| Ex. 6 | Perfluorohexylethyltriethoxysilane | 120 | Lithium zirconate | 4.64 |

Referring to Table 1, in Examples 1 to 6, as compared to Comparative Examples 1 and 2, DTG peak values after 60 days of storage testing conducted at a temperature of 60°C were low. It indicates that the present disclosure is capable of producing a positive electrode active material having excellent storage properties.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A method of producing a positive electrode active material, the method comprising:
a preparation step that involves preparing aggregate particles including a nickel-cobalt-manganese-based compound having a ratio of nickel of 75 mol% or more;
a first treatment step that involves treating a surface of the aggregate particles with a fluorine-based compound at a temperature of 80°C or more; and
a second treatment step that involves treating the surface of the aggregate particles after the first treatment step, with at least one selected from the group consisting of a lithium-containing metal oxide and lithium borate.

2. The method of producing a positive electrode active material according to claim 1, wherein the fluorine-based compound is a compound containing a perfluoroalkyl group.

3. The method of producing a positive electrode active material according to claim 1 or 2, wherein the lithium-containing metal oxide is at least one selected from the group consisting of lithium tungstate, lithium zirconate, lithium titanate, and lithium aluminate.

4. The method of producing a positive electrode active material according to any one of claims 1 to 3, further comprising a mixing step that involves mixing the aggregate particles after the second treatment step, with single particles including a nickel-cobalt-manganese-based compound having a ratio of nickel of 70 mol% or more.

5. The method of producing a positive electrode active material according to claim 4, wherein a mass ratio between the aggregate particles and the single particles is from 20:80 to 50:50.

6. A positive electrode active material, wherein a gas production amount after storage testing conducted at a temperature of 60°C for 60 days is 6.0 cm³/Ah or less, and aggregate particles (12) containing a nickel-cobalt-manganese-based compound having a ratio of nickel of 75 mol% or more are included.

7. A positive electrode plate (20), comprising the positive electrode active material according to claim 6.

8. A non-aqueous electrolyte secondary battery (100), comprising the positive electrode plate (20) according to claim 7.
